# EUROPÄISCHE PATENTANMELDUNG

(11) **EP 1 652 655 A2**
(43) Veröffentlichungstag der Anmeldung: **03.05.2006**
(21) Anmeldenummer: 05109816.8
(22) Anmeldetag: 21.10.2005
(51) Int. Cl.: B29C 67/00, A61C 13/00

(54) **Verfahren zur Herstelllung eines Rapid-Prototyping-Modells mit elektrischen leitfähigen Bereichen**

(30) Priorität: 28.10.2004 DE 102004052365
(71) Anmelder: BEGO Bremer Goldschlägerei Wilh. Herbst GmbH & Co. KG, 28359 Bremen (DE)
(72) Erfinder: Dierkes, Stephan, 28195 Bremen (DE); Wiest, Thomas, 36088 Hünfeld (DE)
(74) Vertreter: Eisenführ, Speiser & Partner

(57) **Zusammenfassung**

Die Erfindung betrifft ein Verfahren zur Herstellung eines Rapid-Prototyping-Modells (24). Vorgeschlagen werden die Schritte (a) Bereitstellen eines Gemisches aus einem oder mehreren fluiden, verfestigbaren Materialien und einer oder mehreren elektrisch leitfähigen Substanzen und anschließend (b) Herstellen des Rapid-Prototyping-Modells (24) durch Rapid Prototyping unter Verwendung des Gemisches so, dass das hergestellte Rapid-Prototyping-Modell in einem oder mehreren Bereichen (26,28,30) seiner Oberfläche aufgrund der Anwesenheit der elektrisch leitfähigen Substanz bzw. Substanzen elektrisch leitfähig ist und in seinem Innern eine poröse Struktur besitzt.

## Beschreibung

Die Erfindung betrifft ein Verfahren zur Herstellung eines Rapid-Prototyping-Modells für die elektrolytische oder elektrophoretische Abscheidung. Gemäß einem weiteren Aspekt betrifft die Erfindung ein Verfahren zur Herstellung eines keramischen Grünlings. Die Erfindung betrifft des Weiteren ein Verfahren zur Herstellung eines Keramikbauteils, ein Verfahren zur Herstellung eines Rapid-Prototyping-Modells mit einer metallischen Beschichtung und ein Verfahren zur Herstellung eines metallischen Bauteils. Schließlich betrifft die Erfindung die Verwendung eines 3D-Druckers.

Bekannt ist die Herstellung von Rapid-Prototyping-Modellen aus beispielsweise Wachs oder Kunststoff. Hierzu wird beispielsweise die Ink-Jet Technologie eingesetzt. Bei diesem Verfahren werden von einem oder mehreren Druckkopf /köpfen kleine Kügelchen flüssigen Materials abgegeben, die auf das entstehende Rapid-Prototyping-Modell auftreffen und erstarren. So wird "punktweise" das Rapid-Prototyping-Modell aufgebaut.

Ein weiteres Verfahren des additiven Aufbaus eines Rapid-Prototyping-Modells ist die Stereolithographie. Dabei wird Harz lagenweise aufgetragen und durch Licht selektiv bestrahlt. Die Bereiche des Harzes, die bestrahlt werden, vernetzen. Es kommt zu einer lokalen Verfestigung. Der überschüssige, nicht vernetzte Harzanteil kann einfach entfernt werden. Zurück bleibt ein dreidimensionales Rapid-Prototyping-Modell.

Insbesondere durch die beiden genannten Verfahren sind sehr komplexe Rapid-Prototyping-Modelle mit hoher Genauigkeit herstellbar. Sie dienen zum Beispiel als Modelle für den Modellguss in der Dentaltechnik oder der Schmuckindustrie. Aber sie dienen auch als Grundkörper oder Form für die elektrophoretische oder elektrolytische Abscheidung. Dabei zeichnet die elektrophoretische und elektrolytische Abscheidung die Realisierung kleinster Strukturdetails und exzellenter Oberflächen aus.

Bisher wird vor der elektrophoretischen oder elektrolytischen Abscheidung die Oberfläche des Rapid-Prototyping-Modells z.B. mit einem Leitlack (z.B. Silberleitlack) oder Besputtern elektrisch leitend gemacht.

Anschließend werden die Rapid-Prototyping-Modelle beispielsweise elektrolytisch beschichtet; alternativ wird an die mit Leitlack überzogenen Rapid-Prototyping-Modelle in einem elektrophoretischen Prozess Schlicker angelagert. Dabei setzt sich eine Keramikschicht ab, aus der in weiteren Verfahrensschritten ein Grünling und schließlich ein keramisches Bauteil hergestellt werden.

Anwendungsbeispiele, die sich aus der Kombination der Rapid-Prototyping-Prozesse mit dem Leitfähigmachen und dem Beschichten oder Abscheiden von Schlicker ergeben, liegen in der Erzeugung von metallischen oder keramischen Überzügen oder Formteilen. Damit lassen sich Einzelteile und auch Kleinserien aus dem endgültigen Material unter Kosten- und Zeitersparnis erzeugen. Darüber hinaus führt aber auch die Erzeugung von dreidimensionalen Mikrostrukturen bzw. mikrostrukturierte Oberflächen zu neuen Anwendungsfeldern in der Mikrosystem- und Mikroverfahrenstechnik.

Nachteilig beim Auftragen eines Leitlacks ist, dass es bei dessen Verwendung zu nicht genau vorherbestimmbaren Geometrieänderungen kommt. Beim Sputterverfahren für das Rapid-Prototyping-Modell kommt es bei senkrecht zum Sputterstrahl stehenden Strukturflächen zu geringeren Schichtdicken als bei horizontal zum Sputterstrahl verlaufenden Strukturflächen. Die im letzten Fall gebildeten dünneren Schichten weisen einen höheren elektrischen Widerstand auf. Für beide Arten des Leitfähigmachens, Auftragen eines Leitlacks und Besputtern, gilt, dass sie arbeitsintensiv und insbesondere bei komplexeren Bauteilen nicht maschinell durchführbar sind.

Zur elektrophoretischen Abscheidung von Keramikschichten auf einem Modell wurden bereits bestimmte gegossene Modelle aus einem durch Zusatz leitfähiger Substanzen leitfähig gemachten verfestigbaren Material eingesetzt. Vgl. Both, von H., Dauscher, M., Hausselt, J. (Materials Process Technology) Elektrophoretische Herstellung keramischer Mikrostrukturen, Keramische Zeitschrift, 56, 2004, 298-303.

WO 02/064335 A1 offenbart bestimmte Verfahren des 3D-Druckens.

DE 103 32 802 A1 offenbart Verfahren zur Herstellung einer belastbaren Struktur aus Oxidkeramik.

DE 103 11 446 A1 offenbart ein Verfahren zum Verbinden von Material zur Herstellung von Formkörpern mittels selektiver Inhibition.

EP 0 420 614 A1 offenbart Verfahren zum Beschichten stereolithographischer Teile.

Der Erfindung liegt die Aufgabe zugrunde, Nachteile im Stand der Technik zu überwinden.

Die Erfindung löst die Aufgabe durch ein Verfahren zur Herstellung eines Rapid-Prototyping-Modells für die elektrolytische oder elektrophoretische Abscheidung, mit den Schritten:
- Bereitstellen eines Gemisches aus einem oder mehreren fluiden, verfestigbaren Materialien und einer oder mehreren elektrisch leitfähigen Substanzen und anschließend
- Herstellen des Rapid-Prototyping-Modells durch Rapid Prototyping unter Verwendung des Gemisches so, dass das hergestellte Rapid-Prototyping-Modell in einem oder mehreren Bereichen seiner Oberfläche aufgrund der Anwesenheit der elektrisch leitfähigen Substanz bzw. Substanzen elektrisch leitfähig ist und in seinem Innern eine poröse Struktur besitzt

Die Erfindung löst die Aufgabe zudem durch ein Verfahren zur Herstellung eines keramischen Grünlings mit den Schritten
- Herstellen eines Rapid-Prototyping-Modells nach einem erfindungsgemäßen Verfahren (vorzugsweise in einer bevorzugten Ausführungsform, siehe dazu unten),
- gegebenenfalls Verringern der Oberflächenimperfektionen des Rapid-Prototyping-Modells, insbesondere durch spanendes Nachbearbeiten, insbesondere Sandstrahlen,
- elektrolytisches und/oder elektrophoretisches Abscheiden eines Schlickers auf dem Rapid-Prototyping-Modell, so dass sich eine Keramikschicht bildet,
- gegebenenfalls Trocknen der abgeschiedenen Keramikschicht,
- gegebenenfalls Bearbeiten der Keramikschicht und/oder des Rapid-Prototyping-Modells durch spanendes Abtragen, zusätzliches Auftragen von keramischem Material auf die Keramikschicht und/oder durch Aufbringen eines Verfestigers
und
- Entfernen des Modells, insbesondere durch Ausschmelzen, Ausbrennen oder Herauslösen,
so dass ein keramischer Grünling entsteht.

Die Erfindung löst die Aufgabe zudem durch ein Verfahren zur Herstellung eines Keramikbauteils mit den Schritten
- Herstellen eines Grünlings nach einem erfindungsgemäßen Verfahren zur Herstellung eines Grünlings,
- gegebenenfalls spanendes Nachbearbeiten der Oberfläche des Grünlings und
- Wärmebehandeln des Grünlings, so dass ein Keramikbauteil entsteht.

Des Weiteren löst die Erfindung die Aufgabe durch ein Verfahren zur Herstellung eines Rapid-Prototyping-Modells mit einer metallischen Beschichtung, mit den Schritten:
- Herstellen eines Rapid-Prototyping-Modells nach einem erfindungsgemäßen Verfahren zur Herstellung eines Rapid-Prototyping-Modells (vorzugsweise in einer bevorzugten Ausführungsform, siehe dazu unten),
- gegebenenfalls Verringern der Oberflächenimperfektionen, vorzugsweise durch spanendes Nachbearbeiten, vorzugsweise Sandstrahlen,
- elektrolytisches oder elektrophoretisches Abscheiden einer Metallschicht auf dem Rapid-Prototyping-Modell, so dass ein Modell mit einer metallischen Beschichtung entsteht, und
- gegebenenfalls Nachbearbeiten der metallischen Beschichtung und/oder des Rapid-Prototyping-Modells, vorzugsweise durch Fräsen und/oder Polieren.

Des Weiteren löst die Erfindung die Aufgabe durch ein Verfahren zur Herstellung eines metallischen Bauteils mit den Schritten:
- Herstellen eines Rapid-Prototyping-Modells mit einer metallischen Beschichtung nach einem erfindungsgemäßen Verfahren zur Herstellung eines Rapid-Prototyping-Modells mit einer metallischen Beschichtung, wobei die Metallschicht selbsttragend ist,
- Entfernen des Rapid-Prototyping-Modells, insbesondere durch Ausschmelzen, Ausbrennen oder Herauslösen, so dass die selbsttragende Metallschicht als metallisches Bauteil verbleibt, und
- gegebenenfalls Nachbearbeiten des Metallbauteils, vorzugsweise durch Fräsen und/oder Polieren.

Schließlich löst die Erfindung die Aufgabe durch die Verwendung eines 3D-Druckers mit einem, zwei oder mehr Drucksystemen und/oder Druckköpfen, zum Ausdruck eines Rapid-Prototyping-Modells, das ein oder mehrere verfestigte Materialien umfasst und das in einem oder mehreren Bereichen seiner Oberfläche eine oder mehrere elektrisch leitfähige Substanzen umfasst.

Unter Rapid Prototyping werden im Folgenden Verfahren verstanden, die aus in einem Computer (Rechner) gespeicherten Daten, welche die Geometrie eines Bauteils beschreiben, ein Bauteil mit den gleichen geometrischen Abmessungen erzeugen, ohne dass menschliches Eingreifen im Hinblick auf die Gestaltgebung notwendig ist. Vor dem eigentlichen Rapid Prototyping werden günstigerweise die im Rechner durch geometrische Daten beschriebenen Bauteile durch den Einsatz von Softwarewerkzeugen hinsichtlich ihrer späteren physikalischen Eigenschaften getestet. So ist es z.B. sinnvoll, die mechanische Stabilität und die Masse des fertigen Bauteils zu berechnen und mit der Spezifikation zu vergleichen.

Es kann unterschieden werden in abtragendes und additives Rapid-Prototyping. Beim abtragenden Rapid Prototyping wird aus Vollmaterial Material abgetragen. Beim additiven Rapid-Prototyping, das besonders gut zur Durchführung der erfindungsgemäßen Verfahren geeignet ist, wird hingegen Material auf das entstehende Rapid-Prototyping-Modell abgeschieden und das Rapid-Prototyping-Modell so aufgebaut.

Unter einem fluiden Material wird ein Material verstanden, das bei gegebener Temperatur und bei gegebenem Druck eine Viskosität von unter 1000 Pa·s besitzt. Verfestigbar sind fluide Materialien insbesondere dann, wenn sie durch Erkalten, Verdampfen eines flüchtigen Bestandteils, Polymerisieren, Lichtaushärten, Abbinden oder Vernetzen in den festen Zustand überführt werden können. Insbesondere gehören Stoffe, die bei 20 °C und 1013 hPa fest sind und bei erhöhter Temperatur (z.B. im Bereich von 50 °C bis 250 °C) und 1013 hPa eine Viskosität von unter 10 Pa·s aufweisen, bei dieser Temperatur und diesem Druck zu den fluiden, verfestigbaren Materialien. Sie (wieder-)erstarren beim Erkalten.

Bei Materialien, die keinen definierten Schmelzpunkt haben (z.B. bei mehrphasigen Substanzen) wird diejenige Temperatur als Schmelzpunkt betrachtet, bei der die Viskosität des Materials bei 1013 hPa 10 Pas unterschreitet. Es versteht sich, dass beim Bereitstellen des fluiden, verfestigbaren Materials oder der fluiden, verfestigbaren Materialien von festen oder fluidisierbaren, wieder verfestigbaren Materialien ausgegangen werden kann, die fluidisiert werden.

Gemische sind beispielsweise Suspensionen, Emulsionen oder Lösungen.

Günstigerweise umfasst das in erfindungsgemäßen Verfahren eingesetzte Gemisch ein oder mehrere Zusätze. Vorteilhafterweise umfasst das Gemisch beispielsweise ein Dispergierhilfsmittel, das über elektrostatische und/oder sterische Wechselwirkung mit eventuell vorhandenen Partikeln deren Homogenisierung und Stabilisierung bewirkt. Darüber hinaus kann die Anwesenheit eines Benetzungsmittels vorgesehen sein, das die Zugabe einer oder mehrerer elektrisch leitfähiger Pulver mit einer hohen Oberflächenspannung ermöglicht. Es können zudem Materialien verwendet werden, die als Verdicker oder Verdünner des Gemischs dienen.

Unter elektrolytischer Abscheidung wird das Wandern von Ionen in einem elektrischen Gleichfeld und deren Entladung an einer Elektrode unter Bilden eines Überzugs aus dem Stoff verstanden, der aus den entladenen Ionen hervorgeht. Der Prozess der technischen Nutzung der elektrolytischen Abscheidung wird unterschieden in Galvanoplastik (auch Galvanoformung genannt) und Galvanotechnik. Bei der Galvanoplastik werden metallische Gegenstände durch elektrolytische Prozesse hergestellt. Die Galvanotechnik dient der Herstellung metallischer Überzüge. Die Galvanotechnik kann wiederum unterteilt werden in funktionale und dekorative Galvanotechnik.

Die funktionale Galvanotechnik dient der Herstellung funktionaler Beschichtungen, beispielsweise zum Korrosionsschutz, zum Verschleißschutz, zur Verbesserung katalytischer Eigenschaften oder zur Verbesserung der elektrischen Leitfähigkeit. Beispiele für funktionale Galvanotechnik sind die Verzinkung von Schrauben, die Hartverchromung von Maschinenteilen, das Vergolden oder Versilbern elektrischer Kontakte und die Beschichtung von Trägersubstraten mit katalytisch wirksamen Metallschichten zur Herstellung von Katalysatoren für die chemische Industrie oder zur Herstellung von Brennstoffzellen. Die dekorative Galvanotechnik dient der Herstellung metallischer Dekorationsschichten. Beispiele sind die Kunststoffgalvanisierung, die Verchromung von Stahlrohrmöbeln und das Vergolden von Schmuck und Besteck.

Unter elektrophoretischer Abscheidung wird das Wandern in einer Flüssigkeit dispergierter Partikel in einem elektrischen Gleichfeld verstanden, bei dem es in der Umgebung einer Elektrode zu einer Abscheidung dieser Partikel kommt. Die dispergierten Partikel sind in der Regel in einem wässrigen oder organischen Dispersionsmittel in Anwesenheit von Peptisatoren verschlickert. Hierbei bilden sich Partikel mit ausgeprägten elektrischen Doppelschichten aus. In einem hinreichend starken elektrischen Feld in der unmittelbaren Umgebung der Elektrode agglomerieren die dispergierten Partikel, und es bildet sich eine dicht gepackte Partikelanordnung, die die Oberflächenstruktur der Elektrode präzise abformt. Durch nachfolgende Arbeitsschritte, wie Trocknen und/oder Sintern, werden Keramikbauteile erhalten, die nur geringe Eigenspannungen, Dichtegradienten und Zusammensetzungsschwankungen aufweisen, was günstig hinsichtlich Lebensdauer und Verschleißverhalten ist.

Unter einem elektrisch leitfähigen Bereich einer Oberfläche wird insbesondere ein Oberflächenbereich eines Raumabschnitts verstanden, in dem der spezifische elektrische Widerstand kleiner ist als 500 Ωm. Die elektrische Leitfähigkeit eines elektrisch leitfähigen Bereichs der Oberfläche resultiert im Rahmen der vorliegenden Erfindung in der Regel insbesondere daraus, dass der diesen Bereich umfassende Raumabschnitt aus Material besteht, das während der Herstellung des Rapid-Prototyping-Modells aus dem Gemisch aus einem oder mehreren fluiden, verfestigbaren Materialien und einer oder mehreren elektrisch leitfähigen Substanzen hervorgegangen ist. Unter einer elektrisch leitfähigen Substanz wird insbesondere eine Substanz mit einem spezifischen elektrischen Widerstand von unter 500 Ωm verstanden.

Unter einem keramischen Grünling wird ein keramischer Körper verstanden, der so weit mechanisch stabil ist, dass er sein Eigengewicht dauerhaft trägt und damit mechanisch stabil ist, der jedoch durch Lagern in Wasser wieder mechanisch instabil wird. Keramische Grünlinge können durch Sintern in ein Keramikbauteil überführt werden. Ein Keramikbauteil ist auch in Wasser dauerhaft mechanisch stabil.

Vorteilhaft an der Erfindung ist zunächst die Einsparung von menschlicher Arbeitskraft, da der Arbeitsschritt des elektrischen Kontaktierens durch Aufbringen einer elektrisch leitfähigen Schicht zum Beispiel per Hand entfällt. Das Kontaktieren ist dann besonders leicht über Elektroden möglich, wenn beim Rapid Prototyping entsprechende Kontakte bereits mit erstellt werden. Vorteilhaft ist des Weiteren die höhere Maßhaltigkeit, da im erfindungsgemäßen Verfahren keine zusätzlichen Schichten auf die Oberfläche des Rapid-Prototyping-Modells aufgebracht werden müssen. Durch die hohe Maßhaltigkeit ist zudem die Fertigung von Präzisionsbauteilen möglich.

In einem bevorzugten erfindungsgemäßen Verfahren werden als elektrisch leitfähige Substanzen Graphit, Ruß, andere leitfähige Substanzen auf Basis von Kohlenstoff (vorzugsweise mit Kohlenstoff-Sechsringschichten) und/oder Metallpartikel, vorzugsweise Silberpartikel verwendet. Es hat sich gezeigt, dass mit diesen Materialien Rapid-Prototyping-Modelle hergestellt werden können, die mechanisch stabil und gleichzeitig in einem oder mehreren Bereichen ihrer Oberfläche aufgrund der Anwesenheit der elektrisch leitfähigen Substanz besonders gut elektrisch leitfähig sind. Der Einsatz von Graphit, Ruß und anderen leitfähige Substanzen auf Basis von Kohlenstoff (vorzugsweise mit Kohlenstoff-Sechsringschichten) ist besonders bevorzugt.

Vorteilhaft an der Erfindung ist zudem, dass aufgrund der erfindungsgemäß vorgesehenen Porosität im Innern des Modells (also unterhalb der Ober- bzw. Außenfläche, die elektrophoretisch oder elektrolytisch zu beschichten ist), das Entfernen des Modells aus der abgeschiedenen Schicht bzw. dem Grünling oder Bauteil (keramisch und/oder metallisch) im Vergleich mit dem Einsatz kompakter Modelle deutlich erleichtert ist.

Der spezifische elektrische Widerstand der leitfähigen Bereiche liegt bei unter 500 Ω m. Dies trägt dazu bei, dass abgeschiedene Keramik- bzw. Metallschichten nicht zu unterschiedlich in der Schichtstärke sind.

Bei sehr geringen Konzentrationen an elektrisch leitfähiger Substanz unterscheidet sich die elektrische Leitfähigkeit des Gemischs kaum von der elektrischen Leitfähigkeit der fluiden, verfestigbaren Materialien allein. Bei Zugabe elektrisch leitfähiger Substanz(en) steigt die elektrische Leitfähigkeit des Gemischs in der Regel proportional zur Konzentration der elektrisch leitfähigen Substanz(en) an. Bei kontinuierlicher Steigerung der Konzentration der elektrisch leitfähigen Substanz(en) im Gemisch wird ab einer bestimmten Konzentration ein stark überproportionaler Anstieg der elektrischen Leitfähigkeit beobachtet. Der Grund hierfür liegt in der Ausbildung eines durchgehenden Netzwerks, das aus sogenannten Leitungspfaden durch das Material besteht. Die Konzentration, bei der der Anstieg der Leitfähigkeit überproportional wird, ist die Perkolationskonzentration.

Wird die Konzentration der elektrisch leitfähigen Substanzen im Gemisch gegen die elektrische Leitfähigkeit aufgetragen (Leitfähigkeitskurve), so ist die Perkolationskonzentration insbesondere bei Konzentrationen überschritten, die höher liegen als die Konzentration, bei welcher der erste Wendepunkt liegt, in dem die Leitfähigkeitskurve von einer konvexen in eine konkave Krümmung übergeht.

Wird der Anteil an elektrisch leitfähigen Substanzen zu hoch gewählt, kann es zu einer mechanischen Instabilität des Rapid-Prototyping-Modells kommen.

Alternativ wird der Anteil der elektrisch leitfähigen Substanzen am Gemisch so hoch gewählt, dass das durch Rapid Prototyping hergestellte Rapid-Prototyping-Modell in einem oder mehreren Bereichen seiner Oberfläche leitfähig ist und gleichzeitig das Gemisch Materialeigenschaften aufweist, die eine gute Einsetzbarkeit des Gemischs im Rapid-Prototyping-Prozess gestatten. Der Anteil an leitfähigen Substanzen wird nach oben hin begrenzt durch die vom Rapid-Prototyping-Prozess vorgegebenen Eigenschaften des aufzubauenden oder abzutragenden Materials. In Vorversuchen wird dazu der Anteil der elektrisch leitfähigen Substanzen am Gemisch über weite Grenzen variiert und ermittelt, bei welchem Anteil die Einsetzbarkeit optimal ist. Insbesondere wird der Anteil an elektrisch leitfähigen Substanzen so gewählt, dass die Viskosität des Gemischs optimal für die Ausführung des Rapid-Prototyping-Prozesses ist.

Als günstig hat sich herausgestellt, elektrisch leitfähige Substanzen zu verwenden, die aus kleinen Partikeln, insbesondere mit einem mittleren Partikeldurchmesser im Bereich von 5nm bis 50µm, insbesondere 10nm bis 10µm, bestehen. Als ebenfalls günstig hat sich herausgestellt, elektrisch leitfähige Substanzen zu verwenden, die eine mehrmodale Partikelverteilung besitzen. Dabei kann es sich um eine bimodale oder trimodale Verteilung handeln. Dadurch lassen sich die Viskosität und die Leitfähigkeit des Materials günstig beeinflussen.

Auch die Zugabe von Kupferchlorid, vorzugsweise 3 bis 6 mol pro Gramm Gemisch, hat sich als günstig erwiesen, insbesondere, wenn es sich beim fluiden, verfestigbaren Material um Epoxydharz handelt, dem als elektrisch leitfähige Substanz Ruß beigemischt wird.

Besonders bevorzugt ist ein erfindungsgemäßes Verfahren, bei dem beim Herstellen des Rapid-Prototyping-Modells das fluide, verfestigbare Material bzw. die fluiden, verfestigbaren Materialen unter Bildung einer Matrix verfestigt werden, in welche die elektrisch leitfähige Substanz bzw. die elektrisch leitfähigen Substanzen eingebettet sind, so dass diese gemeinsam mit der Matrix ein verfestigtes Gemisch bilden, dessen spezifischer elektrischer Widerstand kleiner als 500 Ω m ist.

Bevorzugt ist zudem ein erfindungsgemäßes Verfahren, bei dem der Anteil der elektrisch leitfähigen Substanzen im elektrisch leitfähigen Bereich der Oberfläche über dem Einfachen, vorzugsweise über dem 1,5-fachen der Perkolationskonzentration liegt, die bei gleichen relativen Konzentrationen der elektrisch leitfähigen Substanzen bestimmt wird. Hierdurch wird erreicht, dass die elektrische Spannung, die in Arbeitsschritten der erfindungsgemäßen Verfahren zur elektrolytischen oder elektrophoretischen Abscheidung angelegt werden muss, nicht zu hoch gewählt werden muss.

Die Perkolationskonzentration bei gleichen relativen Konzentrationen der elektrischen leitfähigen Substanzen wird dabei wie folgt bestimmt: Dem fluiden verfestigbaren Material, bzw. den fluiden verfestigbaren Materialien, die nicht gleichzeitig elektrisch leitfähige Substanzen sind, wird elektrisch leitfähige Substanz bzw. werden elektrisch leitfähige Substanzen zugegeben. Das Verhältnis der elektrisch leitfähigen Substanzen untereinander bleibt im Gemisch dabei stets konstant. Vor und nach Zugeben der elektrisch leitfähigen Substanz(en) wird die elektrische Leitfähigkeit des Gemischs bestimmt. Das Zugeben wird mehrfach wiederholt, so dass die Abhängigkeit der elektrischen Leitfähigkeit des Gemischs von der Konzentration der elektrisch leitfähigen Substanz bzw. der elektrisch leitfähigen Substanzen in einem weiteren Konzentrationsbereich bestimmt ist.

Vorzugsweise ist das fluide verfestigbare Material bzw. sind die fluiden, verfestigbaren Materialien aus der Gruppe ausgewählt, die aus Wachs und Kunststoff, insbesondere Thermoplast und lichthärtendem Harz besteht.

In einer bevorzugten Ausführungsform eines erfindungsgemäßen Verfahrens ist zumindest eine elektrisch leitfähige Substanz gleichzeitig ein fluides, verfestigbares Material.

Besonders bevorzugt ist ein erfindungsgemäßes Verfahren, bei dem das Rapid-Prototyping-Modell durch additives Rapid-Prototyping, insbesondere durch Fused Deposition Modeling und/oder Stereolithographie und/oder 3D -Drucken, wie Inkjet-Modelling hergestellt wird.

Beim Fused Deposition Modeling wird ein kontinuierlicher Kunststoff- oder Wachsdraht an-/aufgeschmolzen und platziert (wiederverfestigt). Die Erzeugung von Bauteilen über die Stereolithographie erfolgt beispielsweise über das lagenweise Auftragen eines Fotopolymers und dem anschließenden, selektiven Vernetzen des Polymers mittels UV-Licht. Beim Inkjet-Verfahren werden kleine Material-Kügelchen flüssig aus einem Druckkopf abgegeben, die sich auf dem entstehenden Modell absetzen und dort erstarren (verfestigen).

Bei einer anderen Form des 3D-Druckes, dem Inkjet-Printen, handelt es sich um ein Verfahren, bei dem zuvor aufgeheiztes Wachs bzw. Kunststoff (Thermoplast) oder ein Fotopolymerharz den 3D-Drucker flüssig verlässt und auf dem Bauteil erstarrt. Das Inkjet-Printen lässt sich unterscheiden durch die Anzahl der Düsen und durch die Anzahl der Druckköpfe, aus denen Material abgegeben wird

So arbeiten beispielsweise die Geräte der Firma Solidscape Inc., U.S.A. und BPM Technology mit einer Düse (Single Jet, Ballistic Particle Manufacturing) und den Materialien Wachs und Thermoplast, wohingegen die Inkjet-Drucker von den Firmen 3D-Systems sowie von Objet Geometries Ltd. mit mehreren Düsen (Multi-Jet Modeling, Poly-Jet) ausgestattet sind und mit den Materialien Wachs und/oder Fotopolymeren arbeiten. Wobei die Systeme, die mit mehreren Düsen arbeiten, zur deutlich schnelleren Modelerzeugung führen.

Die bereits genannten Firmen bieten jeweils Geräte an, die mit zwei oder mehr Drückköpfe ausgestattet sind. Das erlaubt es, Rapid-Prototyping-Modelle aus mehreren Substanzen simultan oder nacheinander schichtweise aufzubauen. In der Praxis werden so beispielsweise Trägerstrukturen zur Unterstützung von Hinterschneidungen mit einem weiteren Material aufgebaut, das sich in seinen physikalischen Eigenschaften vom ansonsten verwendeten Material unterscheidet.

Besonders bevorzugt ist ein erfindungsgemäßes Verfahren mit dem zusätzlichen Schritt:
- Bereitstellen eines im verfestigten Zustand elektrisch isolierenden, fluiden und verfestigbaren Materials, wobei das (in seinem Innern poröse) Rapid-Prototyping-Modell unter Verwendung diese Materials und des Gemisches so durch Rapid Prototyping hergestellt wird, dass mindestens zwei elektrisch leitfähige Bereiche seiner Oberfläche jeweils so von dem elektrisch isolierenden Material begrenzt sind, dass sie gegeneinander elektrisch isoliert sind.

Unter einem elektrisch isolierenden Material wird dabei ein Material mit einem spezifischen Widerstand von über 5000 Ωm verstanden. Beispielsweise Wachs erfüllt diese Kriterium.

Hierdurch wird erreicht, dass zumindest zwei leitfähige Bereiche auf unterschiedliche elektrische Potentiale gesetzt werden können. Das erlaubt es, an verschiedenen Stellen der Oberfläche des Rapid-Prototyping-Modells verschiedene Schichtdicken durch elektrolytisches oder elektrophoretisches Abscheiden abzuscheiden.

Besonders bevorzugt ist ein erfindungsgemäßes Verfahren, bei dem das Rapid-Prototyping-Modell so hergestellt wird, dass es in Teilen seines Volumens elektrisch leitfähig ist und die elektrisch leitfähigen Bereiche seiner Oberfläche durch die elektrisch leitfähigen Teile seines Volumens kontaktiert werden. Auf diese Weise wird ein geringer Innenwiderstand der Rapid-Prototyping-Modells erreicht.

Vorzugsweise wird das Rapid-Prototyping-Modell durch Stereolithographie hergestellt, wobei die fluiden, verfestigbaren Materialien lichtaushärtbar sind, wobei sie vorzugsweise aus der Gruppe ausgewählt sind, die aus lichtaushärtendem Harz und lichtaushärtbarem Wachs besteht. In diesem Fall kann das Modell im Inneren neben der Porosität auch Bereiche aufweisen, in denen das Material nicht oder nicht vollständig ausgehärtet ist. Diese Bereiche sind geschlossen, so dass das flüssige Material nach dem Aufbau des Modells nicht entfernt werden kann.

Besonders bevorzugt ist ein erfindungsgemäßes Verfahren mit den zusätzlichen Schritten:
- nach dem Bereitstellen des Gemisches Verfestigen des Gemisches, so dass ein Vorkörper, insbesondere in Form eines Blocks, entsteht und
- Herstellen des Rapid-Prototyping-Modells durch Fräsen.

Es handelt sich hierbei um ein abtragendes Rapid-Prototyping-Verfahren. Der hergestellte Block wird vorzugsweise nur tief in seinem Innern Poren besitzen, so dass beim Fräsen nicht in die poröse Struktur eingegriffen wird und eine glatte Oberfläche (auf der elektrophoretisch oder elektrolytisch abgeschieden werden soll) erreichbar ist.Bevorzugt ist ein erfindungsgemäßes Verfahren zur Herstellung eines keramischen Grünlings oder eines Keramikbauteils oder eines Rapid-Prototyping-Modells mit einer metallischen Beschichtung oder eines metallischen Bauteils, bei dem das Rapid-Prototyping-Modell in mindestens zwei gegeneinander elektrisch isolierten Bereichen seiner Oberfläche elektrisch leitfähig ist und bei dem beim elektrolytischen oder elektrophoretischen Abscheiden der Metallschicht und/oder dem elektrophoretischen Abscheiden des Schlickers auf dem Rapid-Prototyping-Modell diese mindestens zwei gegeneinander elektrisch isolierten Bereiche
(a) zu unterschiedlichen Zeitpunkten unter Spannung gesetzt und/oder spannungsfrei geschaltet werden und/oder
(b) auf voneinander verschiedene Spannungen gesetzt werden,
so dass sich auf den mindestens zwei gegeneinander isolierten Bereichen Schichten aus Metall und/oder Schlicker in unterschiedlichen Dicken abscheiden.

Hierdurch wird erreicht, dass an verschiedenen Stellen der Oberfläche unterschiedliche Schichtdicken elektrolytisch oder elektrophoretisch abgeschieden werden können.

Besonders bevorzugt ist ein erfindungsgemäßes Verfahren zur Herstellung eines Keramikbauteils, bei dem das Wärmebehandeln des Grünlings ein Sintern zu einem porösen oder zu einem dichten Keramikbauteil ist.

Bevorzugt ist ein erfindungsgemäßes Verfahren, bei dem auf eine auf dem Rapid-Prototyping-Modell abgeschiedene Keramikschicht elektrolytisch oder elektrophoretisch eine Metallschicht abgeschieden wird und/oder auf eine auf dem Rapid-Prototyping-Modell abgeschiedene Metallschicht elektrophoretisch eine Keramikschicht abgeschieden wird.

Unter einer auf dem Rapid-Prototyping-Modell abgeschiedenen Keramikschicht wird dabei auch eine Keramikschicht verstanden, die auf einer Metallschicht abgeschieden worden ist, die ihrerseits auf dem Rapid-Prototyping-Modell abgeschieden worden ist.

Entsprechend wird unter einer auf dem Rapid-Prototyping-Modell abgeschiedenen Metallschicht auch eine solche Metallschicht verstanden, die auf einer oben genannten Keramikschicht abgeschieden worden ist. Durch wechselndes Abscheiden von Keramik- und Metallschichten lassen sich so Mehrfachschichten erzeugen.

Im Folgenden wird die Erfindung anhand der beigefügten Zeichnung und anhand von fünf Ausführungsbeispielen näher erläutert. In der Zeichnung zeigt:
- Fig. 1: eine Längsschnittansicht eines durch ein Verfahren nach einem Ausführungsbeispiel der Erfindung hergestellten Keramikbauteils in Form eines Dentalformteils,
- Fig. 2: ein durch ein Verfahren nach einem Ausführungsbeispiel der Erfindung hergestelltes Rapid-Prototyping-Modell in Form eines dentalen Modells im Längsschnitt,
- Fig. 3: das Rapid-Prototyping-Modell aus Fig. 2 mit einer angelagerten Keramikschicht im Längsschnitt,

- Fig. 4: die schematische Darstellung eines durch ein Verfahren nach einem Ausführungsbeispiel der Erfindung hergestellten Rapid-Prototyping-Modells, mit Präparationsabsatz und abgeschiedener Keramikschicht,
- Fig. 5: das Rapid-Prototyping-Modell aus Fig. 3 mit einer angelagerten durchgehenden Keramikschicht im Längsschnitt, und
- Fig. 6: eine Querschnittsansicht eines Rapid-Prototyping-Modells zur Herstellung eines metallischen Bauteils nach einem Verfahren gemäß einem Ausführungsbeispiel der Erfindung.

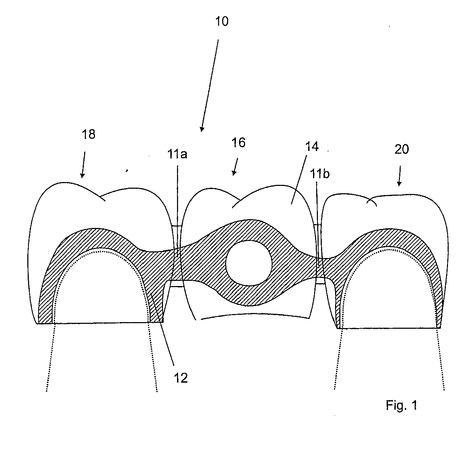

Zunächst wird die Erfindung anhand der Figuren 1 bis 5 für die Herstellung eines Rapid-Prototyping-Models in Form eines dentalen Modells erläutert.

### Ausführungsbeispiel 1: Herstellung eines Keramikbauteils

Die Erfindung wird zunächst anhand der Herstellung eines Dentalformteils (Keramikbauteil) für eine dreigliedrige Brückenrestauration erläutert. Die Brückenrestauration umfasst ein Zwischenglied, das einen nicht mehr vorhandenen Zahn ersetzt, sowie zwei Glieder, die auf jeweils einen Stützzahn, d. h. einen ersten bzw. einen zweiten Stützzahn, aufgesetzt werden.

Zunächst wird vom Mundraum eines Patienten ein Abdruck genommen. Hierzu wird in der Regel eine Silikon-, Alginat- oder Polyether-Abformmasse eingesetzt. Nach dem Abhärten der Abformmasse wird das entstandene Negativ mit Gips ausgegossen. Aus diesem Positiv wird das Meistermodell gefertigt. Das Meistermodell (nicht gezeigt) gibt im Rahmen der Abformgenauigkeit die Situation im Mund des Patienten vollständig wieder.

Aus diesem Meistermodell wird durch Scannen ein Datenmodell erstellt. Hierzu wird beispielsweise ein Linien-Scanner des Typs Speedscan der BEGO GmbH & Co. KG eingesetzt. Die so erhaltenen Scan-Daten werden an einen Rechner übermittelt und auf einem Bildschirm dargestellt. An diesem Datenmodell wird mittels entsprechender Software der Zahnersatz modelliert. Dies erfolgt mit einer Standardsoftware der BEGO GmbH & Co. KG (CAD-Software SOFTSHAPE). Anschließend wird die Geometrie des Datenmodells so vergrößert, dass ein im weiteren Verfahren auftretender Sinterschrumpf (z. B. eines Keramikkäppchens) kompensiert wird. Zusätzlich wird die Präparationslinie als Präparationskante im Datenmodell anmodelliert. Ebenfalls wird ein Zementspalt im Datenmodell anmodelliert. Der Zementspalt ist der Raum, der für die Zementierung der Käppchen auf den Zahnstümpfen erforderlich ist.

Anschließend wird die Porosität des dentalen Modells festgelegt. Dabei wird die Porosität im Inneren des dentalen Modells größer gewählt, während die Außenbereiche keine oder eine geringere Porosität aufweisen.

Die geometrische Gestalt der Keramikbrücke und deren Lage im Mundraum des Patienten sind nun rechnerisch erfasst und die Lage und Art des Zwischenglieds kann rechnerisch festgelegt werden. Es werden nun die Kräfte simuliert, die beim Einsatz einer entsprechenden Keramikbrücke im Mundraum zu erwarten sind. Hierzu werden in der Simulation typische Druck- und Scherkräfte auf die Oberfläche aufgebracht und mittels Finite-Element-Methode resultierende Kräfte in der Keramikbrücke und deren Oberfläche ermittelt. Dadurch werden die Stellen der Keramikbrücke ermittelt, an denen mit den höchsten Kräften zu rechnen ist. Dies gilt neben den Käppchen im Wesentlichen für das Zwischenglied. Anschließend wird errechnet, ob die Materialstärke an dem Zwischenglied und den Verbindern, aber auch an den Käppchen ausreichend ist, um die ermittelten Kräfte aufnehmen zu können. Ist dies nicht der Fall, wird das Datenmodell des Käppchens so verändert, dass die Materialstärke in diesem Punkt größer gewählt wird. Anschließend wird die geschilderte Simulationsrechnung mit dem veränderten Datenmodell erneut durchgeführt. Dieser iterative Prozess wird so lange durchgeführt, bis eine Geometrie der Keramikbrücke gefunden ist, welche die vorgegebene Festigkeit aufweist.

Nachdem durch die oben beschriebenen (rechnerischen) Schritte die geometrische Gestalt des geplanten Dentalformteils 10 (vgl. Fig. 1) festgelegt ist, wird in einem weiteren rechnerischen Schritt das Datenmodell des geplanten Dentalformteils, das auf Basis von STL-Daten vorliegt, und damit des im Rapid-Prototyping-Verfahren herzustellenden dentalen Modells so verändert, dass der Sinterschrumpf ausgeglichen wird. Anschließend werden (im vorliegenden Ausführungsbeispiel) drei elektrisch leitfähige Bereiche auf der Oberfläche des künftigen dentalen Modells und deren jeweilige Kontaktierung festgelegt.

Anschließend wird das Datenmodell dreidimensional auf einem 3D-Drucker des Typs T66 der Solidscape, Inc., Merrimack, USA ausgedruckt bzw. geprintet. Beim InkJet-Printen werden von einem Druckkopf kleine Kügelchen flüssigen Materials auf das entstehende Werkstück abgegeben, die dort erstarren und das dentale Modell aufbauen. Durch die Dichte der abgegebenen Kügelchen wird die Porosität des dentalen Modells dem Datenmodell entsprechend eingestellt.

Verwendet werden zur Herstellung des dentalen Modells (a) ein elektrisch isolierendes und (b) ein mit Rußpartikeln elektrisch leitfähig gemachtes Wachs. Im Ausführungsbeispiel wird als erstes Druckmaterial ein elektrisch nichtleitendes Wachs des Herstellers Solidscape eingesetzt. Dieses Wachs hat einen Schmelzpunkt von 54 bis 76 °C und ist nicht mit einer leitfähigen Substanz versehen. Als mit Rußpartikeln elektrisch leitfähig gemachtes Wachs wird Wachs des Herstellers Solidscape eingesetzt, das mit einem Massenverhältnis von 10:1 mit Ruß (Printex XE2, Degussa AG mit einer CTAB-Obertläche von 600m²/g) gemischt wurde. Hieraus ergibt sich ein Wachs-Graphit-Gemisch mit einem spezifischen elektrischen Widerstand von ca. 1 Ωm. Es versteht sich, dass das leitfähige Wachs elektrisch leitende Bereiche des fertigen Dentalmodells definiert.

Figur 1 zeigt in der Längsschnittansicht ein fertiges Dentalformteil 10 einer dreigliedrigen Brücke. Das Dentalformteil 10 besteht aus einem Gerüst 12 und einer Verblendung 14. Ein Zwischenglied 16 liegt dabei zwischen einem ersten Eckglied 18 (in der Zeichnung links) und einem zweiten Eckglied 20 (in der Zeichnung rechts) und ist mit beiden durch Verbinder 11a, 11b verbunden. Das Eckglied 18 wird auf einen hier punktiert eingezeichneten (linken) Stützzahn, das Eckglied 20 auf einen ebenfalls punktiert eingezeichneten (rechten) Stützzahn aufgesetzt. Das Zwischenglied 16 ersetzt einen nicht mehr vorhandenen Zahn. Das Dentalformteil wurde nach dem im Folgenden beschriebenen Verfahren hergestellt.

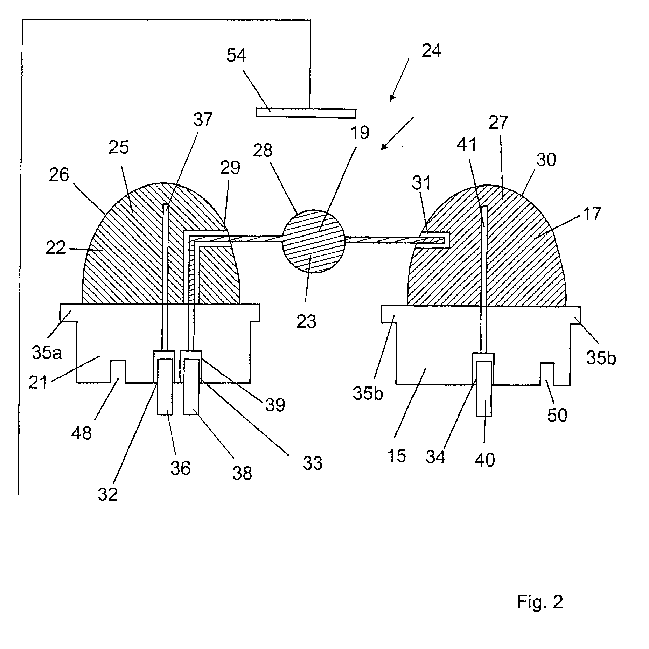

Figur 2 zeigt schematisch ein fertiges dentales Modell 24, das ein erstes Stützstrukturelement 25 im Bereich des linken Eckglieds 18 (vgl. Fig. 1) umfasst. Das Stützstrukturelement 25 wiederum umfasst einen ersten isolierenden Abschnitt 21 und einen elektrisch leitenden Abschnitt 22. Der isolierende Abschnitt 21 ist aus isolierendem Wachs, der leitende Abschnitt 22 aus leitendem Wachs ausgedruckt worden. Ein elektrisch leitfähiger Bereich 26 erstreckt sich entlang der Oberfläche des elektrisch leitenden Abschnitts 22. Die Stützstrukturelemente entsprechen in ihren Proportionen zumindest im Wesentlichen den Stümpfen der in Fig. 1 punktiert dargestellten Stützzähne. Die Poren im Innern des Modells sind nicht zeichnerisch dargestellt.

Das dentale Modell 24 umfasst des Weiteren ein Zwischen-Strukturelement 19 in dem Bereich des Zwischenglieds 16 (vgl. Fig. 1). Ein elektrisch leitfähiger Bereich 28 erstreckt sich über die Oberfläche des Zwischen-Strukturelements 19.

Schließlich umfasst das dentale Modell 24 ein zweites Stützstrukturelement 17 im Bereich des rechten Eckglieds 20 (vgl. Fig. 1), das einen elektrisch leitenden Abschnitt 27 und einen elektrisch isolierenden Abschnitt 15 umfasst. Ein elektrisch leitfähiger Bereich 30 erstreckt sich über die Oberfläche des elektrisch leitenden Abschnitts 27.

Die elektrisch leitfähigen Bereiche 26, 28 und 30 sind Bereiche der Oberfläche der jeweils zugehörigen elektrisch leitenden Abschnitte 22, 23 und 27 und sind im vorliegenden Fall leitfähig aufgrund der Leitfähigkeit der elektrisch leitenden Abschnitte 22, 23 und 27 selbst. In einer alternativen Ausführungsform sind die Abschnitte 22, 23 und 27 nichtleitend und weisen an ihrer Oberfläche lediglich eine dünne Schicht elektrisch leitfähiger Substanz auf. Die Dicke der elektrisch leitfähigen Oberflächen-Bereiche 26, 28, 30 beträgt in diesem Fall ca. 0,2 mm bis 1 mm. In beiden Fällen weisen die elektrisch leitfähigen Bereiche 26, 28, 30 im Rahmen der Fertigungsgenauigkeit keine Porosität auf.

Die drei elektrisch leitfähigen Bereiche 26, 28 und 30 (in Fig. 2 durch unterschiedliche Schraffierungen kenntlich gemacht) sind gegeneinander elektrisch isoliert. Zwischen dem leitfähigen Bereich 26 und dem elektrisch leitfähigen Bereich 28 befindet sich eine elektrische Isolation 29, zwischen den elektrisch leitfähigen Bereichen 28 bzw. 30 befindet sich eine weitere elektrische Isolation 31.

Beim Ausdruck des dentalen Modells 24 werden aufgrund entsprechender Vorgaben aus dem Datenmodell, die dort in einem vorangegangenen Arbeitsschritt anmodelliert worden sind, Präparationskanten 35a und 35b vorgesehen. Zudem werden Löcher 32, 33, 34 in den isolierenden Abschnitten 15, 21 ausgespart, in die Passstifte bzw. Elektroden eingreifen. Im in Figur 2 gezeigten dentalen Modell 24 ist eine erste Elektrode 36 vorgesehen, die in das Loch 32 eingreift und den elektrisch leitfähigen Bereich 26 des Stützstrukturelements 25 über einen Leiter 37 kontaktiert. Eine zweite Elektrode 38 greift in das Loch 33 ein und kontaktiert über einen Leiter 39 den elektrisch leitfähigen Bereich 28 des Zwischen-Strukturelements 19 und eine dritte Elektrode 40 entsprechend kontaktiert den elektrisch leitfähigen Bereich 30 des Stützstrukturelements 17 über einen Leiter 41.

Das dentale Modell wird über hier nicht eingezeichnete Passstifte, von denen einer in eine Ausnehmung 48 und ein weiterer in eine Ausnehmung 50 greift, an einem ebenfalls nicht eingezeichneten Modellträger befestigt. Damit ist die Herstellung des Rapid-Prototyping-Modells in Form des dentalen Modells abgeschlossen.

Zur Herstellung eines Dentalformteils wird das an einem Modellträger befestigte dentale Modell 24 so in ein Schlickerbad getaucht, dass die Elektroden 36, 38, 40 nicht mit dem Schlicker in Berührung kommen.

Zwischen der zweiten Elektrode 38 und einer Schlickerbadelektrode 54, die das Schlickerbad kontaktiert, das hier nicht eingezeichnet ist, wird eine Spannung angelegt, so dass ein definierter Strom fließt. Als Schlicker wird im vorliegenden Fall eine stabilisierte Mischung aus Ethanol und Aluminiumoxidpulver verwendet. Als Verflüssigungsmittel bietet sich für Aluminiumoxid Polyarcrylsäure an, die eine hohe Partikelladung bewirkt und gleichzeitig die Funktion des Binders übernimmt.

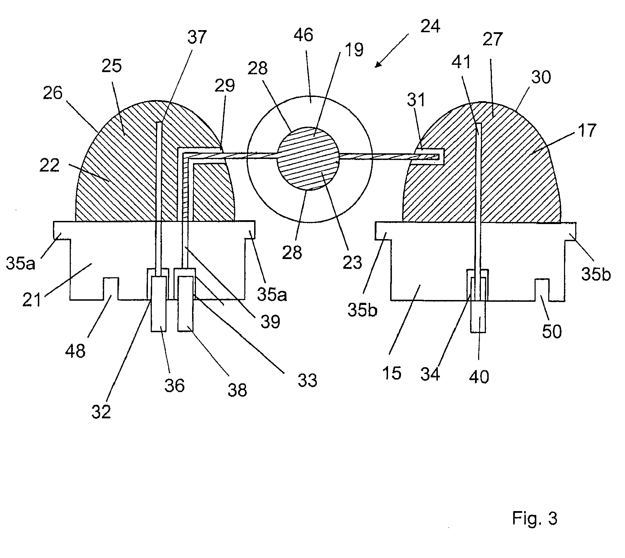

Durch das Anlegen der Spannung lagert sich am elektrisch leitfähigen Bereich 28 Schlicker an (Fig. 3). Die Schichtdicke hängt dabei insbesondere von der geflossenen elektrischen Ladung, dem gewählten Schlickermaterial und der Größe der Oberfläche des elektrisch leitfähigen Bereichs 28 ab. Die Schichtdicke der Schlickerschicht ist dabei an jeder Stelle des elektrisch leitfähigen Bereichs 28 gleich groß. Die Größe der Oberfläche wird aus dem Datenmodell berechnet. Die geflossene Ladung ergibt sich als Produkt aus dem gemessenen elektrischen Strom und der gemessenen Zeit, in der dieser Strom geflossen ist. Bei Kenntnis der Oberfläche und des elektrischen Stroms kann damit die Zeit berechnet oder zumindest abgeschätzt werden, nach der eine Keramikschicht der gewünschten Dicke abgeschieden ist. Diese Zeit beträgt bis zu wenigen Minuten. Nach dieser Zeit wird der Stromfluss unterbrochen. In Fig. 3 ist ein dentales Modell mit einer derartigen Keramikschicht 46 gezeigt.

Anschließend werden die beiden anderen elektrisch leitfähigen Bereiche 26, 30 zeitgleich kontaktiert und auf ihnen in der gleichen Weise Keramikschichten abgeschieden. Durch Zusammenwachsen der jeweiligen Keramikschichten entsteht eine einheitliche Keramikschicht, nämlich das spätere Gerüst.

Alternativ wird zunächst gleichzeitig auf sämtlichen elektrisch leitfähigen Bereichen 26, 28, 30 Keramik abgeschieden, wobei im Bereich 28 allerdings z. B. die Spannung länger angelegt bleiben kann, um eine besonders dicke Keramikschicht zu erzeugen.

Um die Schichtstärke und die Form der Keramikschicht nachträglich noch zu erhöhen bzw. zu verändern, kann zusätzlicher Schlicker von Hand aufgetragen werden. So erhält das Dentalformteil die gewünschte und charakteristische Form und gleichzeitig kommt es zu einer Erhöhung der zu ertragenden übertragenden Kraft.

Dadurch, dass im Bereich des Zwischenglieds kein Zahn vorhanden ist, der die Brücke abstützt, kommt es unter Kaubelastung in diesem Bereich im Normalfall zu einer stärkeren elastischen Verformung der Brückenrestauration. Um dies zu vermeiden, wird (wie ausgeführt) die Keramikschicht vor allem der Verbinder 11a, 11 b stärker gewählt und dadurch die Verformung reduziert. Die beiden zuletzt abgeschiedenen Keramikschichten haben somit eine geringere Schichtdicke als die zuerst abgeschiedene.

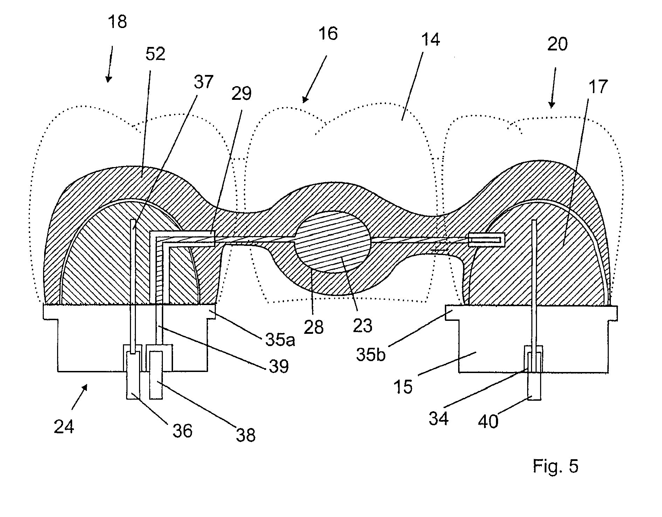

Die Keramikkäppchen besitzen im Bereich der Eckglieder 18 und 20 häufig eine Schichtdicke < 0,8 mm, die Keramik im Bereich des Zwischenglieds 16 ist hingegen in manchen Fällen mehrere Millimeter dick. Fig. 5 zeigt eine zusammengewachsene Keramikschicht 52 auf dem dentalen Modell 24 aus der im Verlauf der nachfolgenden Arbeitsschritte das Käppchen entsteht. Die zusammengewachsene Keramikschicht 52 weist dabei anders als in der Figur gezeigt, eine an jeder Stelle gleiche Schichtdicke auf.

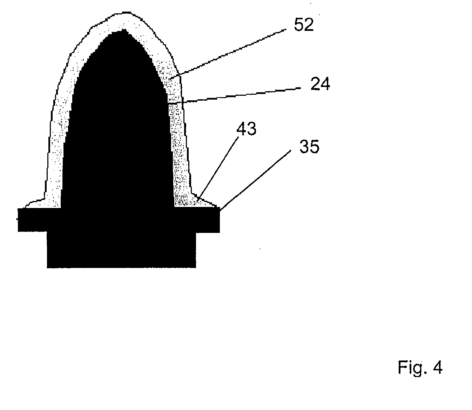

Das dentale Modell 24 samt der abgeschiedenen, zusammengewachsenen Keramikschicht 52 wird der Elektrophorese-Einrichtung entnommen. Der aus der zusammengewachsenen Keramikschicht 52 hervorgegangene Grünling wird nachfolgend durch Fräsen nachbearbeitet. Dabei wird der keramische Grünkörper an der Präparationskante mit einem Fräser oder einem Schleifgerät definiert zurückgeschliffen. Fig. 4 zeigt schematisch ein dentales Modell 24 mit einer darauf abgeschiedenen Keramikschicht 52, die an einer Präparationskante 35 endet. Ein Überstand 43 wird zur Fertigbearbeitung abgetragen.

In den Figuren 2 und 3 sind Präparationskanten 35a, 35b für die Glieder des dort dargestellten Dentalmodells gezeigt. Präparationskanten (Präparationsgrenzen) lassen sich definiert und deutlich als Absatz herausziehen. Damit ist die Begrenzung des dentalen Formteils (z. B. Käppchens) in vertikaler Richtung optisch auch nach der Beschichtung zu erkennen. Unterhalb des Absatzes befindet sich, wie in Figur 4 gezeigt, der Fuß des Zahnstumpfs. Dieser Fuß des Stumpfes ist beispielsweise so dick, dass die Verlängerung der Fläche der resultierenden Oberfläche aus Schichtdicke und Stumpf entspricht. Wenn der Absatz bis zur unteren Oberfläche der Präparationskante 35 heruntergeschliffen wird, dann erfolgt gleichzeitig die definierte Bearbeitung des Käppchens in horizontaler Richtung.

Ein Dentalformteil (Käppchen bzw. Brücke) lässt sich zusammen mit dem Dentalmodell (z. B. Wachsmodell) maschinell bis zur benötigten Präparationslinie bearbeiten. Dazu wird das Datenfile vorzugsweise so bearbeitet, dass z. B. auf der Unterseite des Dentalmodells an definierten Stellen Löcher für z. B. Passstifte sind, oder die Unterseite so geformt wird, dass sie definiert in eine das Modell aufnehmende Form passt. Das so erzeugte dentale Modell kann dann zusammen mit der keramischen Schicht in einer Vorrichtung mit einem Fräser arretiert werden, der dann anhand bereits vorhandener Daten die Kontur nachfahren kann. Auf diesem Weg lässt sich zum Beispiel ein keramisches Abutment herstellen, das auf einem Implantat befestigt wird. Die Oberfläche der Verblendung wird dazu nach genau definierten Geometrien mittels Fräsen angelegt.

Der so fertig bearbeitete Grünling wird auf dem dentalen Modell im Ofen auf 150 °C erwärmt. Dies erfolgt in einem Pulverbett. Dabei trocknet der Grünling und das Wachs (mit einem Schmelzpunkt von 54 bis 76 °C) schmilzt aus. Durch die beim Rapid Prototyping eingebrachte Porosität im Inneren des dentalen Modells können Anrisse des Grünlings weitgehend vermieden werden. Nachfolgend wird der Grünling bei 1300 °C bis 1700 °C fertig gesintert, so dass ein fertiges Dentalformteil entsteht. Der dabei auftretende Sinterschrumpf wurde, wie oben beschrieben, bei der Erstellung des dentalen Modells berücksichtigt, sodass das entstandene Dentalformteil mit hoher Genauigkeit auf das Meistermodell passt.

Das Ausbrennen des Modells und das anschließende Sintern erfolgt vorzugsweise in einem Pulverbett. Stellt man das beschichtete Wachsmodell lediglich auf eine Ausbrennunterlage, dann kann es infolge des ungleichmäßigen Aufschmelzens und Ausbrennens des Modells trotz der Anwesenheit von Poren in seltenen Fällen zu Spannungen im Grünkörper kommen. Da dies jedoch der Zustand ist, in dem die keramische Schicht die niedrigste Festigkeit besitzt, kann es zu Rissen führen. Dies kann unterbunden werden, indem das elektrophoretisch beschichtete Modell in ein Pulverbett gegeben wird. Das führt dazu, dass es nicht infolge der Schwerkraft und dem ungleichmäßigen Wegbrennen des Modells, zu Spannungen und damit zu Zerstörungen kommt. Das Pulverbett hat also folgende Aufgaben: a) das Pulverbett trägt das Bauteil gleichmäßig b) das Pulverbett saugt das Wachs auf bzw. führt es besser weg.

Eine Möglichkeit, die Festigkeit der keramischen Schicht zu erhöhen, damit sie den Verfahrensschritt des thermischen Herauslösens des Modells unbeschadet übersteht, ist die Verwendung eines Bindemittels. Dies kann bereits dem Schlicker hinzugesetzt werden, oder es wird vorzugsweise auf das getrocknete Gerüst gegeben.

Ausführungsbeispiel 2: Herstellung eines Keramikbauteils in Form eines Käppchens bzw. einer Krone (Dentalformteil) nach einem erfindungsgemäßen Verfahren

Es wird ein Meistermodell einer Einzelzahnpräparation bereitgestellt. Dieses wird eingescannt und die erhaltenen Daten werden am PC verarbeitet. Dabei wird das Volumen des zu erzeugenden Modells entsprechend der Volumenabnahme beim Sintern vergrößert, d. h. der Sinterschrumpf kompensiert. Ein Zementspalt wird bei der Auslegung der erforderlichen Geometrie berücksichtigt, der für die Zementierung der Käppchen auf den Zahnstümpfen erforderlich ist. Darüber hinaus wird die Präparationslinie deutlich als Präparationskante herausgezogen.

Das Datenmodell wird so ausgestaltet, dass beim Rapid Prototyping eine dichte, 0,2 mm dicke Oberfläche des Dentalmodells gebildet wird, wohingegen das innere Volumen des Dentalmodells als poröse Stützstruktur aufgebaut wird. Das Datenmodell auf Basis von STL-Daten wird dann über den Rapid Prototyping (printing)-Prozess in ein dentales Modell umgesetzt. Hierzu werden (a) ein elektrisch isolierender und (b) ein mit Rußpartikeln elektrisch leitfähig gemachtes Wachs, wie sie oben beschrieben sind, eingesetzt. Die Bereiche werden vom Präparationsrand begrenzt.

Alternativ wird das dentale Modell durch Stereolithographie aus dem Datenmodell hergestellt. Hierbei werden jeweils ein elektrisch leitfähiges Polymer lagenweise aufgetragen und mittels UV-Licht ausgehärtet. Hierzu wird z. B. ein Gerät der Firma 3d-Systems des Typs SLA 7000 eingesetzt.

Der elektrisch leitende Bereich des fertiggestellten Dentalmodells wird kontaktiert und zusammen mit einer Gegenelektrode in ein Schlickerbad getaucht, das aus dem oben beschriebenen Schlicker besteht.

Nach Anlegen von Spannung ist eine Keramikschicht in Abhängigkeit von der erwünschten Schichtdicke und dem eingestellten Stromfluss bzw. der Spannung nach wenigen Sekunden bis hin zu einigen Minuten fertig abgeschieden.

Der so erzeugte keramische Grünkörper wird zusammen mit dem dentalen Modell getrocknet. Der keramische Grünkörper des Käppchens wird an der Präparationskante mit einem Fräser oder einem Schleifgerät definiert zurückgeschliffen. Zur Veränderung der Kontur kann gegebenenfalls zusätzlicher Schlicker aufgetragen werden. Anschließend erfolgt das thermische Heraustrennen des Modells. Dies erfolgt bereits bei Temperaturen zwischen 54 und 76 °C, da hier bereits der Schmelzpunkt des Wachses erreicht wird. Reste des Wachses, die infolge der Benetzung nicht herausgeflossen sind, verbrennen bei der weiteren Temperaturerhöhung rückstandsfrei. Alternativ kann das Modell chemisch herausgelöst werden. Das alternativ verwendete Rapid-Prototyping-Modell aus Polymer, das über UV-Strahlung ausgehärtet wurde, wird bei Temperaturen bis 550°C vollständig ausgebrannt.

Aufgrund der vorhandenen Poren ist die Entfernung des Rapid-Prototyping-Modells nicht mit einer Beschädigung der Beschichtung verbunden.

Das Sintern des Grünkörpers erfolgt bei Temperaturen von 1300 °C bis 1700 °C. Die Keramikpartikel des Grünkörpers sintern zusammen, so dass es zur Volumenabnahme kommt. Diese Volumenabnahme wurde zuvor berücksichtigt, siehe oben. Das Keramikgerüst wird beispielsweise dichtgesintert oder angesintert. Zur Festigkeitssteigerung wird zusätzlich Glas infiltriert.

Das erhaltene Keramikkäppchen bzw. die erhaltene Krone (dentale Formteil) passt mit hoher Genauigkeit auf das Meistermodell und damit auf die Zahnpräparation. Es besitzt eine hohe Dichte von über 90 % und weist deshalb eine hohe Festigkeit auf. Es kann nicht und wird nicht mit Glas nachinfiltriert werden.

Alternativ zum beschriebenen Dichtsintern des Keramikkäppchens (dentalen Formteils) bei hohen Temperaturen kann der Grünkörper bei Temperaturen zwischen 1000 und 1300°C angesintert werden. Damit verbunden ist eine nur geringe Volumenabnahme aber auch eine verbleibende hohe Porosität. Diese Porosität kann in einem nachgeschalteten Schritt durch Glasinfiltrieren aufgefüllt werden. Da die Volumenabnahme nur gering ist, wird bei dieser alternativen Vorgehensweise das Volumen des zu erzeugenden Dentalmodells auch nur geringfügig gegenüber dem des Meistermodells vergrößert.

Ausführungsbeispiel 3: Herstellung eines Keramikbauteils in Form eines keramischen Mikrobauteils

Dieses Ausführungsbeispiel betrifft ein Zahnrad (Mikrobauteil) in Form eines Stirnrades. Der Arbeitsdurchmesser (Teilkreisdurchmesser) dieses Stirnrades liegt bei 500 µm, die Zähnezahl bei z= 10. Hieraus ergibt sich ein Modul von m=50 µm. Das Zahnrad hat eine Innenbohrung von 150 µm.

Die Erzeugung des Datenmodells für den späteren Rapid-Prototyping-Prozess zur Herstellung des Zahnrads erfolgt am Rechner. Dabei wird berücksichtigt, dass der anhand des Datenmodells erzeugte keramische Grünkörper beim Sintern schrumpft. Es wird eine Geometrievergrößerung des Datenmodells gemäß dieser Volumenabnahme vorgenommen. Anhand dieser CAD-Daten (Datenmodell) des keramischen Grünkörpers des Zahnrades wird am Rechner ein Negativ des um den Sinterschrumpf vergrößerten Zahnrades erstellt, das so ausgerichtet ist, dass dessen Achse senkrecht zur Horizontalen steht. Zudem ist dieses Negativ in horizontale Lagen gleicher Dicke unterteilt. Dieses Negativ wird mittels dem Rapid-Prototyping-Verfahren der Stereolithographie hergestellt. Zum Herstellen wird ein lichtaushärtendes Harz verwendet, das durch die Zugabe von Ruß elektrisch leitend gemacht wurde. Auf ein elektrisch nichtleitendes Substrat wird stereolithographisch eine erste Lage des Gemischs aus lichtaushärtendem Harz und Ruß aufgetragen und vollständig ausgehärtet. Anschließend erfolgt die Auftragung lagenweise mit anschließender, selektiver Belichtung gemäß dem erzeugten Datensatz.

Nach dem Aufbau und dem selektiven Aushärten der letzten Schicht, wird das Substrat zusammen mit dem Rapid-Prototyping-Modell dem Stereolithographiegerät entnommen. Anschließend wird das Rapid-Prototyping-Modell von dem überschüssigen, noch flüssigen Harz befreit. Zurück bleibt das Rapid-Prototyping-Modell in Form einer elektrisch leitenden Negativform des um den Sinterschrumpf vergrößerten Zahnrades auf dem nichtleitenden Substrat. Diese Negativ-Form wird elektrisch kontaktiert und in einen keramischen Schlicker getaucht. Die Zusammensetzung des Schlickers entspricht der im ersten Ausführungsbeispiel.

Nach Anlegen einer Spannung füllt sich das Rapid-Prototyping-Modell (Negativ) mit Schlicker und auf der elektrisch leitfähigen Oberfläche des Rapid-Prototyping-Modells wird der Schlicker elektrophoretisch als Keramikschicht abgeschieden. Nachdem das Rapid-Prototyping-Modell (Negativ) mit der Keramikschicht ausgefüllt ist, wird das Rapid-Prototyping-Modell aus dem Schlickerbad entnommen. Das Rapid-Prototyping-Modell wird zusammen mit dem Substrat, mit dem das Rapid-Prototyping-Modell verbunden ist, in eine Fräse eingespannt. Anschließend erfolgt das Abtragen überschüssigen abgeschiedenen Schlickers von der nach oben weisenden Oberfläche der Form durch Fräsen. In diesem Fräs-Prozess wird auch das Durchgangsloch des späteren Zahnrades erzeugt und eine gute Planparallelität der Zahnradseiten hergestellt. In einer anschließenden thermischen Behandlung (siehe oben) erfolgt das Entfernen der Form sowie das Dichtsintern des keramischen Mikrobauteils in Form des Zahnrades.

Ausführungsbeispiel 4: Herstellung eines metallischen Bauteils gemäß einem erfindungsgemäßen Verfahren

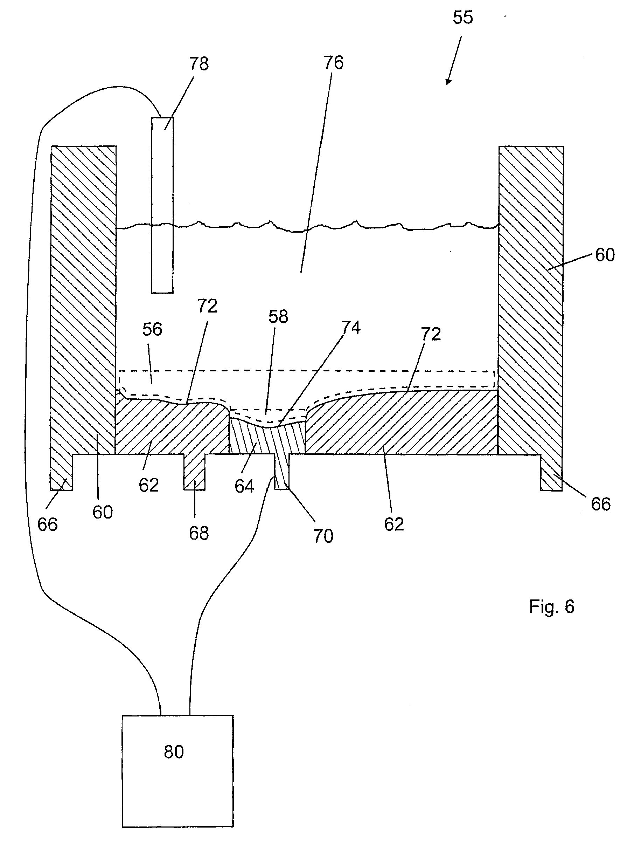

Fig. 6 zeigt ein erfindungsgemäßes Rapid-Prototyping-Modell 55 für die elektrolytische Abscheidung zur Herstellung eines Bauteils 56, das gestrichelt eingezeichnet ist. Die Poren im Innern des Modells sind nicht zeichnerisch dargestellt.

Das Bauteil 56 ist flach und weist auf seiner einen Seite, die in Figur 6 nach unten weist, eine reliefierte Oberfläche auf.

Zunächst wird mit Hilfe eines Rechners ein digitales Datenmodell des Bauteils erstellt. Anschließend wird das Negativ der reliefierten Oberfläche errechnet. Mit Hilfe dieser geometrischen Daten wird das Rapid-Prototyping-Modell 55 durch Ballistic Particle Manufacturing hergestellt. Dazu werden das oben beschriebene Wachs und das oben beschriebene Gemisch aus diesem Wachs und Ruß eingesetzt.

Das Rapid-Prototyping-Modell 55 ist im Querschnitt kreisrund; in Fig. 6 ist ein Querschnitt parallel zur Längsachse des aufrecht stehenden Rapid-Prototyping-Modells 55 gezeigt. Das Rapid-Prototyping-Modell 55 besteht aus drei Abschnitten 60, 62, 64. Der Abschnitt 60 ist aus elektrisch nicht leitfähigem Wachs hergestellt, die beiden Abschnitte 62 und 64 bestehen aus elektrisch leitfähigem Wachs. Der Abschnitt 60 läuft in einen umlaufenden Vorsprung 66 aus, der dazu dient, das Rapid-Prototyping-Modell 55 auf einen Modellträger zu fixieren. Die beiden Abschnitte 62 und 64 laufen nach unten in zapfenartige Vorsprünge 68, 70 aus, die der elektrischen Kontaktierung der beiden Bereiche 62 bzw. 64 dienen. Der Abschnitt 62 weist einen elektrisch leitfähigen Bereich 72 auf seiner nach oben weisenden Oberfläche auf. Entsprechend weist der Abschnitt 64 einen elektrisch leitfähigen Bereich 74 auf seiner nach oben weisenden Oberfläche auf.

Nach Herstellung des Rapid-Prototyping-Modells 55 wird dieses zunächst durch Polieren der elektrisch leitfähigen Bereiche 72, 74 spanend nachbearbeitet. Anschließend wird zunächst eine Lösung 76 eines Silbersalzes in das Rapid-Prototyping-Modell 55 eingefüllt. In diese Lösung wird eine Elektrode 78 eingetaucht, die mit einer Stromquelle 80 elektrisch verbunden ist. Anschließend wird die Stromquelle 80 mit dem zapfenartigen Vorsprung 70 des Abschnitts 64 elektrisch verbunden und eine Spannung zwischen der Elektrode 78 und dem Abschnitt 64 angelegt. Dadurch bedingt scheidet sich Silber auf dem elektrisch leitfähigen Bereich 74 des Abschnitts 64 ab. Der Stromfluss wird solange aufrecht erhalten, bis sich auf dem elektrisch leitfähigen Bereich 74 eine Silberschicht der gewünschten Dicke abgeschieden hat. Die Dicke der Silberschicht lässt sich bestimmen durch die geflossene Ladung, die sich als Produkt aus der Stromstärke und der Zeit ergibt, und der Fläche des elektrisch leitfähigen Bereichs 74, die aus den geometrischen Daten errechnet wird, die der Herstellung des Rapid-Prototyping-Modells 55 zugrunde liegen.

Anschließend wird die Lösung 76 entfernt, eine Kupfersalzlösung eingefüllt und die Vorsprünge 70 und 68 elektrisch miteinander verbunden. Anschließend wird durch Anlegen einer Spannung zwischen der Elektrode 78 und den Abschnitten 62 und 64 eine Kupferschicht auf dem elektrisch leitfähigen Bereich 72 und der abgeschiedenen Silberschicht auf den elektrisch leitfähigen Bereich 74 abgeschieden. Die Elektrolyse wird abgebrochen, sobald die gewünschte Schichtdicke an Kupfer erreicht ist. Die Schichtdicke wird dabei so groß gewählt, dass das Bauteil 56 selbsttragend ist. In einem nachfolgenden Arbeitsschritt wird das Rapid-Prototyping-Modell 55 durch Herauslösen des Wachses mit einer Säure, die die Metalle nicht angreift, entfernt. Zurück bleibt das Bauteil 56, dessen Reliefierung ein genaues Abbild der am Rechner modellierten Reliefierung darstellt.

Ausführungsbeispiel 5: Herstellung eines Rapid-Prototyping-Modells mit metallischer Beschichtung

Dieses Ausführungsbeispiel betrifft die Herstellung eines galvanisierten bzw. elektrolytisch beschichteten Kunststoffteils. Die metallische Beschichtung dient funktionellen oder optischen Zwecken. Die Gestaltung des Kunststoffteils erfolgt am Rechner mittels CAD. Anhand der CAD-Daten wird mit dem Rapid-Prototyping-Verfahren des Fused Deposition Modeling ein Kunststoff-Grundkörper aufgebaut. Bei dem im Rapid-Prototyping-Verfahren eingesetzten Material handelt es sich um einen mit Silber gefüllten Thermoplasten. Der hergestellte Kunststoff-Grundkörper wird elektrisch kontaktiert und in einen Nickelsulfamat enthaltenden Elektrolyten getaucht, in dem sich bereits die Gegenelektrode befindet. Nach Anlegen einer Spannung zwischen Gegenelektrode und Rapid-Prototyping-Modell kommt es zur Abscheidung von Nickel auf den elektrisch leitfähigen Bereichen der Oberfläche des Rapid-Prototyping-Modells. Es wird eine Nickel-Schicht von etwa 100 µm Dicke aufgebaut. Die Regelung der Schichtdicke erfolgt über die Zeit oder Messung des Stromflusses. Ein Nachbehandeln der so erzeugten neuen Oberfläche ist, beispielsweise durch Polieren, je nach Anwendungsfall möglich.

Auf entsprechende Weise lassen sich auch andere Bauteile herstellen, wie beispielsweise Spritzgussformen, Gesenke, Spiegel, Goldgerüste für die Dentaltechnik, Druckplatten zur Aufbringen einer Maserung bei der Herstellung von Kunstleder und Keramiksonderteile. Besonders vorteilhaft können erfindungsgemäße Verfahren zur Herstellung von Kleinstserien von Bauteilen komplexer Geometrie eingesetzt werden.

## Patentansprüche

1. Verfahren zur Herstellung eines Rapid-Prototyping-Modells (24;55), insbesondere eines Rapid-Prototyping-Modells (24;55) für die elektrolytische oder elektrophoretische Abscheidung, mit den Schritten:
- Bereitstellen eines Gemisches aus einem oder mehreren fluiden, verfestigbaren Materialien und einer oder mehreren elektrisch leitfähigen Substanzen und anschließend
- Herstellen des Rapid-Prototyping-Modells (24;55) durch Rapid Prototyping unter Verwendung des Gemisches so, dass das hergestellte Rapid-Prototyping-Modell (24;55) in einem oder mehreren Bereichen (26,28, 30;72,74) seiner Oberfläche aufgrund der Anwesenheit der elektrisch leitfähigen Substanz bzw. Substanzen elektrisch leitfähig ist und in seinem Innern eine poröse Struktur besitzt.

2. Verfahren nach einem der vorstehenden Ansprüche,
**dadurch gekennzeichnet, dass** als elektrisch leitfähige Substanzen Graphit, Ruß, andere leitfähige Substanzen auf Basis von Kohlenstoff (vorzugsweise mit Kohlenstoff-Sechsringschichten) und/oder Metallpartikel, insbesondere Silberpartikel verwendet werden.

3. Verfahren nach einem der vorstehenden Ansprüche,
**dadurch gekennzeichnet, dass** beim Herstellen des Rapid-Prototyping-Modells (24;55) das fluide, verfestigbare Material bzw. die fluiden, verfestigbaren Materialen unter Bildung einer Matrix verfestigt werden, in welche die elektrisch leitfähige Substanz bzw. die elektrisch leitfähigen Substanzen eingebettet sind, so dass diese gemeinsam mit der Matrix ein verfestigtes Gemisch bilden, dessen spezifischer elektrischer Widerstand kleiner als 500 Ω m ist.

4. Verfahren nach einem der vorstehenden Ansprüche,
**dadurch gekennzeichnet, dass** der Anteil der elektrisch leitfähigen Substanzen im elektrisch leitfähigen Bereich der Oberfläche über dem Einfachen, vorzugsweise über dem 1,5-fachen der Perkolationskonzentration liegt, die bei gleichen relativen Konzentrationen der elektrisch leitfähigen Substanzen bestimmt wird.

5. Verfahren nach einem der vorstehenden Ansprüche,
**dadurch gekennzeichnet, dass** das fluide, verfestigbare Material oder die fluiden, verfestigbaren Materialien aus der Gruppe ausgewählt ist bzw. sind, die aus Wachs und Kunststoff, insbesondere lichthärtendem Harz, besteht.

6. Verfahren nach einem der vorstehenden Ansprüche,
**dadurch gekennzeichnet, dass** zumindest eine elektrisch leitfähige Substanz ein fluides, verfestigbares Material ist.

7. Verfahren nach einem der vorstehenden Ansprüche,
**dadurch gekennzeichnet, dass** das Rapid-Prototyping-Modell durch additives Rapid Prototyping, insbesondere durch Fused Deposition Modeling und/oder Stereolithographie und/oder 3D-Drucken, wie Inkjet-Modelling und/oder Ballistic Particle Manufacturing, hergestellt wird.

8. Verfahren nach einem der vorstehenden Ansprüche, mit dem zusätzlichen Schritt:
- Bereitstellen eines im verfestigten Zustand elektrisch isolierenden, fluiden und verfestigbaren Materials, wobei das Rapid-Prototyping-Modell unter Verwendung dieses Materials und des Gemisches so durch Rapid Prototyping hergestellt wird, dass mindestens zwei elektrisch leitfähige Bereiche seiner Oberfläche jeweils so von dem elektrisch isolierenden Material begrenzt sind, dass sie gegeneinander elektrisch isoliert sind.

9. Verfahren nach einem der vorstehenden Ansprüche,
**dadurch gekennzeichnet, dass** das Rapid-Prototyping-Modell so hergestellt wird, dass es in Teilen seines Volumens elektrisch leitfähig ist und die elektrisch leitfähigen Bereiche (26,28,30;72,74) seiner Oberfläche durch die elektrisch leitfähigen Teile seines Volumens (25,19,27;62,64) kontaktiert werden.

10. Verfahren nach einem der vorstehenden Ansprüche,
**dadurch gekennzeichnet, dass** das Rapid-Prototyping-Modell (24;55) durch Stereolithographie hergestellt wird und die fluiden, verfestigbaren Materialien lichtaushärtbar sind, wobei sie vorzugsweise aus der Gruppe ausgewählt sind, die aus lichtaushärtendem Harz und lichtaushärtbarem Wachs besteht.

11. Verfahren nach einem der vorstehenden Ansprüche mit den zusätzlichen Schritten:
- nach dem Bereitstellen des Gemisches Verfestigen des Gemisches, so dass ein Vorkörper, insbesondere in Form eines Blocks, entsteht und
- Herstellen des Rapid-Prototyping-Modells (24;55) durch Fräsen.

12. Verfahren zur Herstellung eines keramischen Grünlings mit den Schritten:
- Herstellen eines Rapid-Prototyping-Modells (24;55) nach einem der vorstehenden Ansprüche,
- gegebenenfalls Verringern der Oberflächenimperfektionen des Rapid-Prototyping-Modells, insbesondere durch spanendes Nachbearbeiten, insbesondere Sandstrahlen,
- elektrophoretisches Abscheiden eines Schlickers auf dem Rapid-Prototyping-Modell, so dass sich eine Keramikschicht bildet,
- gegebenenfalls Trocknen der abgeschiedenen Keramikschicht,
- gegebenenfalls Bearbeiten der Keramikschicht und/oder des Rapid-Prototyping Modells durch spanendes Abtragen, zusätzliches Auftragen von keramischem Material auf die Keramikschicht und/oder durch Aufbringen eines Verfestigers und
- Entfernen des Modells, insbesondere durch Ausschmelzen, Ausbrennen oder Herauslösen,
so dass ein keramischer Grünling entsteht.

13. Verfahren zur Herstellung eines Keramikbauteils mit den Schritten:
- Herstellen eines Grünlings nach Anspruch 12,
- gegebenenfalls spanendes Nachbearbeiten der Oberfläche des Grünlings und
- Wärmebehandeln des Grünlings, so dass ein Keramikbauteil entsteht.

14. Verfahren nach Anspruch 13,
**dadurch gekennzeichnet, dass** das Wärmebehandeln des Grünlings ein Sintern zu einem porösen oder zu einem dichten Keramikbauteil ist.

15. Verfahren zur Herstellung eines Rapid-Prototyping-Modells (24;55) mit einer metallischen Beschichtung, mit den Schritten:
- Herstellen eines Rapid-Prototyping-Modells (24;55) nach einem der Ansprüche 1-11,
- gegebenenfalls Verringern der Oberflächenimperfektionen, vorzugsweise durch spanendes Nachbearbeiten, vorzugsweise Sandstrahlen, und
- elektrolytisches oder elektrophoretisches Abscheiden einer Metallschicht auf dem Rapid-Prototyping-Modell, so dass ein Modell mit einer metallischen Beschichtung entsteht und
- gegebenenfalls Nachbearbeiten der metallischen Beschichtung und/oder des Rapid-Prototyping-Modells, vorzugsweise durch Fräsen und/oder Polieren.

16. Verfahren zur Herstellung eines metallischen Bauteils (55) mit den Schritten:
- Herstellen eines Rapid-Prototyping-Modells (24;55) mit einer metallischen Beschichtung nach Anspruch 15, wobei die Metallschicht selbsttragend ist, und
- Entfernen des Rapid-Prototyping-Modells (24;55), insbesondere durch Ausschmelzen, Ausbrennen oder Herauslösen, so dass die selbsttragende Metallschicht als metallisches Bauteil (55) verbleibt.

17. Verfahren nach einem der Ansprüche 12 bis 16,
**dadurch gekennzeichnet, dass** das Rapid-Prototyping-Modell in mindestens zwei gegeneinander elektrisch isolierten Bereichen seiner Oberfläche elektrisch leitfähig ist und dass beim elektrolytischen oder elektrophoretischen Abscheiden der Metallschicht bzw. dem elektrophoretischen Abscheiden des Schlickers auf dem Rapid-Prototyping-Modell diese mindestens zwei gegeneinander elektrisch isolierten Bereiche
(a) zu unterschiedlichen Zeitpunkten unter Spannung gesetzt und/oder spannungsfrei geschaltet werden und/oder
(b) auf voneinander verschiedene Spannungen gesetzt werden,
so dass sich auf den mindestens zwei gegeneinander elektrisch isolierten Bereichen eine metallische Beschichtung und/oder Schlicker in unterschiedlichen Schichtdicken abscheidet.

18. Verfahren nach einem der Ansprüche 12 oder 15, **dadurch gekennzeichnet, dass** auf eine auf dem Rapid-Prototyping-Modell abgeschiedene Keramikschicht elektrolytisch oder elektrophoretisch eine Metallschicht abgeschieden wird und/oder auf eine auf dem Rapid-Prototyping-Modell abgeschiedene Metallschicht elektrophoretisch eine Keramikschicht abgeschieden wird.
